# DEMANDE DE BREVET EUROPEEN

(11) **EP 1 270 516 A1**
(43) Date de publication de la demande: **02.01.2003**
(21) Numéro de dépôt: 02291227.3
(22) Date de dépôt: 17.05.2002
(51) Int. Cl.: C02F 3/12, C02F 1/66, C02F 11/00

(54) **Procédé d'hydrolyse de boues en exces issues d'une étape de traitement biologique d'un effluent**

(30) Priorité: 22.06.2001 FR 0108266
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Campo, Philippe, 78180 Montigny Le Bretonneux (FR)
(74) Mandataire: Ducreux, Marie

(57) **Abrégé**

L'invention concerne un procédé de traitement d'un effluent comprenant au moins une étape de traitement biologique dudit effluent conduisant à la production de boue biologique, dans lequel au moins une partie de la boue biologique est hydrolysée par mise au contact avec du dioxyde de carbone et sous une pression supérieure ou égale à la pression atmosphérique.

## Description

L'invention concerne un procédé d'hydrolyse des boues produites lors du traitement biologique d'effluents en vue de leur épuration, tels que les eaux usées urbaines ou industrielles.

Les traitements d'épuration biologiques d'effluents consistent généralement à mettre en contact ces effluents avec une biomasse (micro-organismes) qui dégrade la pollution contenue dans ceux-ci en transformant les molécules organiques en minéraux. La mise en oeuvre de tels traitements conduit à une augmentation progressive de la quantité de biomasse et à la nécessité d'évacuer la biomasse en excès communément appelée "boues en excès". Pour faire face à la quantité sans cesse croissante de ces boues biologiques en excès et de leur évacuation, différentes solutions ont été proposées.

Une solution consiste à soutirer ces boues et à leur trouver une utilisation possible. Elles peuvent ainsi être utilisées comme engrais dans l'agriculture (épandage). Toutefois, le respect des normes sur l'environnement et la présence possible de micropolluants ou de métaux lourds dans les boues conduisent à réduire cette utilisation.

Une autre solution consiste à soutirer ces boues et à les incinérer ; il faut alors les transporter vers un incinérateur ce qui implique un coût. De plus, les difficultés pour implanter de nouveaux incinérateurs freinent le développement de cette solution.

Une autre solution consiste à réaliser une oxydation par voie humide des boues en excès : les boues sont alors minéralisées.

Une autre solution consiste à utiliser des moyens permettant de réduire la production de boues au cours du processus biologique de dépollution des eaux. Cette solution consiste à hydrolyser partiellement les boues, c'est-à-dire détruire une partie des micro-organismes qui composent les boues en les rendant partiellement solubles. Les produits issus de l'hydrolyse qui contiennent des composés organiques solubles peuvent alors être renvoyés en tête du traitement d'effluents pour subir le traitement biologique, au cours duquel les micro-organismes vont traiter les hydrolysats de micro-organismes. Une première technique d'hydrolyse connue consiste à exercer une pression mécanique sur les boues provenant du bassin de traitement biologique ce qui provoque l'éclatement d'une partie des cellules des micro-organismes constituant les boues en excès. Il peut s'agir d'un broyage mécanique, de technique de compression/détente, de sonochimie, ... Cette technique est généralement simple à mettre en oeuvre mais présente l'inconvénient de ne réduire que faiblement la production des boues en excès. En outre, le coût énergétique est important. Une deuxième technique d'hydrolyse est basée sur l'action d'agents oxydants tels que : l'ozone, l'air, le peroxyde d'hydrogène ou l'oxygène sous pression. L'inconvénient principal de l'ozone tient aux difficultés inhérentes à l'utilisation de ce réactif très oxydant et à son coût. Quant à l'air, le peroxyde d'hydrogène et l'oxygène, ils ne sont pas assez efficaces seuls : ils doivent être associés à un chauffage et/ou un catalyseur, ce qui augmente également le coût de ces techniques. Une troisième technique d'hydrolyse est l'hydrolyse basique ou acide à l'aide d'agents chimiques éventuellement couplée à une élévation de température, mais cette technique nécessite le réajustement du pH de la solution obtenue avant sa réinjection dans le bassin biologique. L'inconvénient de cette hydrolyse est qu'elle augmente la salinité des boues hydrolysées ce qui peu conduire à un dysfonctionnement de l'étape de traitement biologique.

L'objectif de la présente invention est de proposer un procédé permettant de diminuer la quantité des boues en excès produites classiquement lors d'un traitement biologique des eaux ne présentant pas les inconvénients des procédés ci-dessus mentionnés.

Dans ce but, l'invention concerne donc un procédé de traitement d'un effluent comprenant au moins une étape de traitement biologique dudit effluent conduisant à la production de boue biologique, dans lequel au moins une partie de la boue biologique est hydrolysée au moins partiellement par mise en contact avec du dioxyde de carbone et sous une pression supérieure ou égale à la pression atmosphérique. L'invention se rapporte à tout type de procédé de traitement d'effluent dans lequel l'effluent est soumis à une étape de traitement biologique. Au cours de cette étape de traitement biologique, l'effluent est mis en contact avec des micro-organismes (biomasse) et une boue biologique est générée. Cette boue comprend généralement des micro-organismes vivants et morts, des débris cellulaires, des absorbats et colloïdes organiques, des corpuscules organiques et/ou des particules minérales. Selon l'invention, au moins une partie de la boue biologique générée est mise en contact avec du dioxyde de carbone sous pression de manière à obtenir une hydrolyse des micro-organismes contenus dans la boue biologique. Cette hydrolyse détruit au moins partiellement les micro-organismes. La mise en contact peut se faire dans tout type de réacteur permettant de maintenir une pression supérieure ou égale à la pression atmosphérique. Le réacteur utilisé pour l'hydrolyse est généralement agité de manière à améliorer la mise en contact de la boue et du dioxyde de carbone.

De préférence, le dioxyde de carbone est utilisé dans une quantité telle que l'hydrolyse est réalisée sous une pression partielle en CO₂ d'au moins 0,25 bar, de préférence d'au moins 1 bar, encore plus préférentiellement comprise entre 1 et 15 bars, et de manière avantageuse entre 1 et 10 bars. Le maintien de la pression partielle peut être réalisé par analyse du ciel gazeux du réacteur et compensation par apport du dioxyde de carbone manquant.

En fonction de la pression partielle en CO₂ choisie, le pH des boues biologiques dans le réacteur peut varier entre 3,5 et 7.

La durée de la mise en contact entre la boue biologique à traiter et le dioxyde de carbone dépend de la nature de la boue, de la pression partielle en CO₂, de la mise en oeuvre d'un traitement simultané ou ultérieur complémentaire (couplage avec un agent oxydant tel que : air, O₂, H₂O₂, O₃, broyage, chauffage, ...). En général, cette durée est comprise entre 5 minutes et 3 heures.

Au cours de l'hydrolyse, la température est généralement la température ambiante. Toutefois, il a été observé qu'une température supérieure à la température ambiante peut améliorer l'hydrolyse. Ainsi, la température peut être comprise entre 20 et 250°C, de préférence entre 60 et 100°C.

La quantité de boue biologique prélevée à l'issue de l'étape de traitement biologique et destinée à être hydrolysée dépend de l'excès produit.

Après cette mise en contact sous pression de la boue et du dioxyde de carbone, la boue hydrolysée est ramenée à pression atmosphérique. Lors de ce retour à pression atmosphérique, le dioxyde de carbone en excès dans la boue hydrolysée est dégazé. Suite à ce dégazage, la boue hydrolysée revient spontanément à une teneur en CO₂ habituelle pour un effluent destiné à subir une étape de traitement biologique. En outre, la boue hydrolysée revient à un pH permettant son retour direct dans un bassin de traitement biologique sans traitement intermédiaire. Ce dégazage peut être optimisé par mise en oeuvre d'une cascade sur le flux de boue hydrolysée sortant de l'étape d'hydrolyse. Cette propriété est particulièrement avantageuse lorsque, après l'hydrolyse, la boue hydrolysée est traitée dans l'étape de traitement biologique du procédé. Ainsi, les composés organiques issus de l'hydrolyse peuvent être biodégradés au cours de l'étape de traitement biologique.

Les boues biologiques traitées par hydrolyse au dioxyde de carbone peuvent être de toute nature : elles peuvent être issues d'une culture libre (boues activées) ou fixée ; elles peuvent également être traitées quelles que soient leur concentration. Il peut également s'agir de boues mixtes, c'est-à-dire d'un mélange de boues biologiques et de boues primaires. Elles peuvent provenir d'un bassin de traitement biologique ou d'un clarificateur.

Selon une variante de l'invention, au cours de l'étape d'hydrolyse par le dioxyde de carbone, la boue peut simultanément être mise en contact avec de l'oxygène, du peroxyde d'hydrogène et/ou de l'ozone. La mise en oeuvre ces agents oxydants est comparable à ce qui est habituellement réalisé dans l'art antérieur ; toutefois, la quantité utilisée est généralement moins importante que dans l'art antérieur car il ne s'agit que de traitements complémentaires à l'hydrolyse au dioxyde de carbone. Simultanément à la mise en contact avec le dioxyde de carbone telle que décrite précédemment, la boue peut ainsi être mise en contact avec de l'oxygène à une pression partielle d'au moins 0,5 bar, de préférence comprise entre 0,5 et 20 bars.

Selon une autre variante de l'invention, au cours de l'hydrolyse, la boue peut être mise en contact avec un catalyseur d'oxydation, de préférence choisi parmi les sels de fer.

Selon une autre variante de l'invention, au cours et/ou après l'hydrolyse, la boue peut subir un traitement mécanique. Ce traitement mécanique peut être de toute nature : broyage mécanique, technique de compression/détente, de sonochimie, introduction de la boue hydrolysée dans un tube de faible diamètre, ...

L'invention concerne également l'utilisation du dioxyde de carbone pour hydrolyser une boue biologique.

Un avantage du procédé selon l'invention est que, dès que la boue contenant du dioxyde de carbone sous pression est remise à pression atmosphérique, l'excès de dioxyde de carbone désorbe et la teneur en CO₂ revient à la teneur habituelle dans les boues biologiques et le pH à sa valeur habituelle.

Il a été constaté qu'il était ainsi possible de réduire considérablement la production des boues biologiques en excès, et même de supprimer totalement la production de telles boues.

## Revendications

1. Procédé de traitement d'un effluent comprenant au moins une étape de traitement biologique dudit effluent conduisant à la production de boue biologique, **caractérisé en ce qu'**au moins une partie de la boue biologique est hydrolysée au moins partiellement par mise au contact avec du dioxyde de carbone et sous une pression supérieure ou égale à la pression atmosphérique.

2. Procédé selon la revendication précédente, **caractérisé en ce que** la pression partielle en CO₂ est d'au moins 0,25 bar, de préférence d'au moins 1 bar.

3. Procédé selon l'une des revendications précédentes, **caractérisé en ce que** la durée de la mise en contact est comprise entre 5 minutes et 3 heures.

4. Procédé selon l'une des revendications précédentes, **caractérisé en ce qu'**après l'hydrolyse, la boue hydrolysée est traitée dans l'étape de traitement biologique du procédé.

5. Procédé selon l'une des revendications précédentes, **caractérisé en ce qu'**au cours de l'étape d'hydrolyse, la boue est mise en contact avec de l'oxygène, de l'ozone et/ou du peroxyde d'hydrogène.

6. Procédé selon la revendication précédente, **caractérisé en ce que** l'oxygène présente une pression partielle d'au moins 0,5 bar.

7. Procédé selon l'une des revendications précédentes, **caractérisé en ce qu'**au cours de l'hydrolyse, la boue est mise en contact avec un catalyseur d'oxydation, de préférence choisi parmi les sels de fer.

8. Procédé selon l'une des revendications précédentes, **caractérisé en ce qu'**après l'hydrolyse, la boue subit un traitement mécanique.

9. Procédé selon l'une des revendications précédentes, **caractérisé en ce qu'**au cours de l'hydrolyse, la boue subit un traitement mécanique.

10. Procédé selon l'une des revendications précédentes, **caractérisé en ce qu'**au cours de l'étape d'hydrolyse, la température est comprise entre 20 et 250°C.

11. Utilisation du dioxyde de carbone pour hydrolyser une boue biologique.
